Europäisches Patentamt

European Patent Office

Office européen des brevets

(19)

(11) EP 0 770 693 B1

(12) **EUROPÄISCHE PATENTSCHRIFT**

(45) Veröffentlichungstag und Bekanntmachung des Hinweises auf die Patenterteilung:
18.08.1999 Patentblatt 1999/33

(51) Int Cl.[6]: **C22B 23/00**, B22F 9/22, B22F 9/24, C01G 51/06

(21) Anmeldenummer: 96116474.6

(22) Anmeldetag: 15.10.1996

(54) **Verfahren zur Herstellung Ultrafeines Kobaltmetallpulvers**

Method of preparing ultrafine cobalt metal powder

Procédé d'obtention d'une pouder ultrafine du métal cobalt

(84) Benannte Vertragsstaaten:
**BE DE ES FI FR IT**

(30) Priorität: **27.10.1995 DE 19540076**

(43) Veröffentlichungstag der Anmeldung:
**02.05.1997 Patentblatt 1997/18**

(73) Patentinhaber: **H.C. Starck GmbH & Co. KG**
**38642 Goslar (DE)**

(72) Erfinder:
- **Höhne, Matthias, Dr.**
  **38678 Clausthal-Zellerfeld (DE)**
- **Mende, Bernd**
  **38667 Bad Harzburg (DE)**
- **Eikemeyer, Knut**
  **38707 Altenau (DE)**

(74) Vertreter: **Steiling, Lothar, Dr.**
**Bayer AG**
**Konzernbereich RP**
**Patente und Lizenzen**
**51368 Leverkusen (DE)**

(56) Entgegenhaltungen:
EP-A- 0 047 076          EP-A- 0 344 324
EP-A- 0 461 868          US-A- 3 994 716
US-A- 4 093 450          US-A- 4 840 776
US-A- 5 246 481

- PATENT ABSTRACTS OF JAPAN vol. 4, no. 92 (M-018), 3.Juli 1980 & JP 55 050408 A (SUMITOMO METAL MINING)
- DATABASE WPI Week 9409 Derwent Publications Ltd., London, GB; AN 94-0171154 XP002024420 & JP 06 023 288 A (SUMITOMO METAL MINING ) , 1.Februar 1994

**Beschreibung**

Die vorliegende Erfindung betrifft die Herstellung von aus feinen Kristalliten bestehendem ultrafeinem Kobaltmetallpulver, wobei die Kristallite einen reiskorn- bis kugelförmigen Habitus zeigen und mehr als 90 % der Kristallite einen Durchmesser im Bereich von 0,5 μm bis 2 μm aufweisen, und wobei das Verfahren zur Herstellung des Kobaltmetallpulvers über die Stufe des Kobaltcarbonates läuft.

Hauptanwendungsgebiete von ultrafeinem Kobaltmetallpulver sind die Herstellung von Hartmetallen und Diamantwerkzeugen. Beide Anwendungen stellen unterschiedliche Anforderungen an die Kobaltmetallpulver. Für den Einsatz in Hartmetallen ist besonders ein sehr niedriger Gehalt an Verunreinigungen wie Natrium, Calcium und Schwefel von Bedeutung. Weiterhin ist es wichtig, daß der Gehalt an Sauerstoff und Kohlenstoff nicht zu hoch ist. Die Korngröße und Kornform spielen eine untergeordnete Rolle.

Für die Herstellung von Hartmetallen werden hauptsächlich Mischungen aus Wolframcarbid und etwa 6- 15 % Kobaltmetallpulver bei Temperaturen von ca. 1350 - 1450°C gesintert. Hierbei handelt es sich um eine Flüssigphasensinterung des Kobaltmetallpulvers, bei denen ein Teil des Wolframcarbids sich im Kobalt löst. Beim Abkühlen kommt es zu Rekristallisationsvorgängen, bei denen bereits geringe Mengen an in den Ausgangsstoffen enthaltenen Verunreinigungen wie Natrium (Na), Calcium (Ca) und Schwefel (S) sich bevorzugt an den Korngrenzen der Wolframcarbidkristalle ablagern. Dies kann zu einer lokalen Verringerung der Festigkeit und damit einer Verminderung der Biegebruchfestigkeit führen (12th International Plansee Seminar '89, Vol. 2 (S.421-428)) Bei sehr feinen Hartmetallteilen wie z.B. Mikrobohrern führt dieser Effekt dazu, daß die Werkzeuge leichter an den Stellen verminderter Festigkeit brechen.

Weiterhin ist von Bedeutung, daß der Gehalt an Sauerstoff und Kohlenstoff nicht zu hoch ist, wobei Werte in der Summe bis 0,9 Gew.-% noch akzeptabel erscheinen. Sowohl erhöhte Sauerstoff- als auch Kohlenstoffgehalte können die Kohlenstoffbilanz während des Sintervorganges beeinflussen, so daß es unter Umständen zur Bildung von Versprödungen durch Etaphase bzw. durch Bildung von C-Porosität durch Kohlenstoffnester kommt. Beide Effekte verschlechtern die Hartmetallqualität ebenfalls deutlich.

Bei der Herstellung von Diamantwerkzeugen auf Kobaltmetallpulverbasis, die zum ganz überwiegenden Teil aus Kobaltmetallpulver, synthetischen Diamanten sowie weiteren Pulvern wie Kupfer, Zinn, Eisen, Nickel usw. bestehen, dominiert ganz eindeutig der Einfluß der physikalischen Eigenschaften wie Korngröße und Kornform, während die chemischen Verunreinigungen an den obengenannten Elementen zwar eine Mikroporosität bewirken können, dies aber nur einen untergeordnete Rolle spielt. Der Grund liegt hierfür bei dem in der Produktion von Diamantwerkzeugen üblicherweise angewendeten Temperaturbereich von 700 - 950°C, bei denen im Gegensatz zur Herstellung von Hartmetallen, eine Festphasensinterung auftritt, so daß die Pulverausgangseigenschaften dominierend erhalten bleiben.

Experimentell wird beobachtet, daß eine Abnahme der Korngröße eine Zunahme der Härte heißgepreßter Kobaltsegmente bewirkt. Dies läßt sich an Hand der Hall - Petch Gleichung verdeutlichen:

$$H = \frac{1}{\sqrt{AD}}$$

H:    Härte
A:    Konstante
D:    Mittlerer Teilchendurchmesser

Theoretisch läßt sich dieses Verhalten so erklären, daß die Härte von dem spezifischen Korngrenzenanteil pro Volumeneinheit beeinflußt wird, da die Korngrenzen die Ausbreitungen von Versetzungen erschweren. Da die Härte mit den Schneideigenschaften der Segmente korreliert, führt eine Härtesteigerung häufig zu besseren Werkzeugstandzeiten und ist daher von großer Bedeutung. Um den spezifischen Korngrenzenanteil pro Volumeneinheit zu erhöhen, kann die Primärkorngröße der Pulver verringert werden (J. Konstanty und A. Busch in PMI, Vol. 23, No. 6, (1991)). Eine weitere Möglichkeit, den spezifischen Korngrenzenanteil pro Volumeneinheit zu erhöhen, besteht jedoch darin, bei gleicher oder ähnlicher Primärkorngröße die Kornform so zu verändern, daß die Primärkristalle einen eher abgerundeten Habitus aufweisen.

Es gibt eine Reihe an unterschiedlichen ultrafeinen Kobaltmetallpulvern, die die Anforderungen der Hartmetall- bzw. Diamantwerkzeughersteller in unterschiedlichem Maße erfüllen.

In der EP-A 0 113 281 der Firma Eurotungstene, Grenoble / Frankreich, wird die Herstellung des Kobaltmetallpulvers über das Polyolverfahren beschrieben, wobei unterschiedliche Kobaltverbindungen mit Polyolen bei 85°C reduziert werden. Dieses Kobaltmetallpulver kann allerdings bis zu 3 Gew.-% an Kohlenstoff und Sauerstoff aufweisen, so daß bei der sonst guten chemischen Reinheit und dem kornformbedingten hohen spezifischen Korngrenzenanteil pro Volumen eine ungünstige Beeinflussung der Hartmetalleigenschaften nicht ausgeschlossen werden kann.

Das Handelsprodukt Kobaltmetallpulver Co Uf der Firma Eurotungstene wird nach eigenen technischen Informationen aus Kobalthydroxiden hergestellt. Dieses Produkt zeichnet sich durch einen relativ hohen spezifischen Korngrenzenanteil pro Volumeneinheit aus. Nachteilig können jedoch die erhöhten Gehalte an Natrium und Schwefel sein.

Ein verfahrenstechnisch völlig anderer Weg wird in der US-A 5 246 481 der Firma Sherritt Gordon, Alberta / Kanada, offenbart. Hierbei wird die Herstellung dieses Pulvers durch die Reduktion von Kobaltaminsulfatlösungen, denen lösliche Silbersalze als Keimbildner zugesetzt wurden, vorgenommen. Die Dotierung mit Silbersalzen kann zu ungewöhnlich hohen Gehalten an Silber von bis zu typisch 3 600 ppm im Kobaltmetallpulver führen. Auffällig ist fernerhin der Kohlenstoffgehalt, der nach eigenen Angaben ca. 1 750 ppm beträgt.

In US-A 4 840 776 ist ein Verfahren zur Herstellung von Kobalthydroxid durch Fällung aus einer Hexaminkobalt (III)chlorid-Lösung beschrieben, wobei durch Waschung des Fällungsproduktes mit heißem Wasser alkaliarmes Kobalthydroxid erhalten wird. Das Kobalthydroxid weist noch ca. 200 ppm $NH_3$ und 54 ppm Na (bezogen auf Kobalt) auf.

Es ist Aufgabe dieser Erfindung, ein Kobaltmetallpulver zur Verfügung zu stellen, welches die Nachteile der beschriebenen Pulver nicht aufweist.

Es wurde nun ein Verfahren zur Herstellung von Kobaltmetallpulver gefunden, wobei die Kristallite einen reiskorn- bis kugelförmigen Habitus zeigen und mehr als 90 % der Kristallite einen Durchmesser im Bereich von 0,5 μm bis 2 μm aufweisen, wobei es Gehalte an Natrium kleiner als 100 ppm und an Kohlenstoff von kleiner als 500 ppm aufweist.

Bevorzugt sind die Gehalte an Natrium kleiner als 50 ppm, an Calcium und Schwefel jeweils kleiner als 30 ppm.

In einer weiteren bevorzugten Ausführungsform weisen mehr als 90 % der Kristallite ein Längen- zu Breitenverhältnis im Bereich von 1:1 bis 5:1 auf, während der Durchmesser der Kristallite bevorzugt 0,7 μm bis 0,95 μm beträgt. Die Korngröße der Kristallite gemessen nach ASTM B 330 beträgt bevorzugt 0,7 μm bis 0,95 μm.

Die folgende Tabelle 1 gibt einen Überblick über das erfindungsgemäße ultrafeine Kobaltmetallpulver im Vergleich zu verschiedenen Handelsprodukten.

Tabelle 1:

| Übersicht über verschiedene ultrafeine Kobaltmetallpulver | | | | | | |
|---|---|---|---|---|---|---|
| Hersteller | HCST | HCST | Eurotungstene | Eurotungstene | Sherritt Gordon * | Sumitomo |
| Produkt | erfindungsgemäßes Produkt | Co IV C Handelsprodukt | Co UF | Co ex Polyol | Co UF | |
| Korngröße FSSS/µm | 0,7 -0,95 | > 0,95 | 0,9 | 0.5 | 0,7 -0,9 | 0,8 -1,9 |
| Habitus | reiskornbis kugelförmiger Habitus | elipsoidischer Habitus, | sphäroidisch mit abgerundeten Kristallflächen | sphärisch | sphärisch | längliche Kristalle |
| typische Verunreinigungen | | | | | | |
| Na (ppm) | 50 | 60 | 240 | 5 | 20-90 | 130-150 |
| Ca (ppm) | 30 | 40 | 8 | 6 | 6 | 70 - 80 |
| S (ppm) | 30 | 35 | 140 | 20 | 50 | ** |
| C (ppm) | <500 | <500 | <500 | 2000 | 1750 | ** |
| C+O2 (%) | 0.8 | 0.8 | 0.9 | 3 - 4 | 0.9 | ** |

* Durch den Herstellprozeß bedingt, weist diese Co-Sorte für CoMP ungewöhnlich hohe Gehalte an Ag von bis zu 3600 ppm auf.

** In der Patentschrift sind keine entsprechenden Angaben enthalten.

Im Vergleich zum Handelsprodukt Co IVC von HCST (Hermann C. Starck, GmbH & Co. KG, Goslar) weist das neue, erfindungsgemäße Produkt eine weitere Steigerung der Reinheit und einen nochmals vergrößerten spezifischen Korngrenzenanteil pro Volumeneinheit durch einen reiskorn- bis kugelförmigen Habitus auf. Zusätzlich weist das erfindungsgemäße Produkt in einer bevorzugten Ausführungsform Korngrößen gemessen an ASTM B 330 von 0,7 bis 0,95 μm auf, während diese im Handelsprodukt Co IVC der H.C. Starck GmbH & Co. KG größer als 0,95 μm betragen.

Gegenstand dieser Erfindung ist ein Verfahren zur Herstellung von Kobaltmetallpulver nach Anspruch 1. Es handelt sich hierbei um ein Verfahren zur Herstellung von Kobaltmetallpulver, wobei ein lösliches Kobaltsalz mit einer Lösung und/oder Suspension von Alkali-, Erdalkali-, Kobalt- und/oder Ammoniumcarbonaten und/oder -hydrogencarbonaten im pH-Bereich von 5,5 bis 6,8 umgesetzt, das dabei entstandene Fällprodukt abgetrennt, mit Wasser bis zur angestrebten Reinheit gewaschen, getrocknet und das so erhaltene Kobaltcarbonat zum Kobaltmetallpulver reduziert wird.

Aus der JP-A 78 123 722 der Firma Sumitomo, Japan, geht ebenfalls ein Verfahren zur Herstellung von Kobaltmetallpulver über die Zwischenstufe des Kobaltcarbonates hervor. Aufgrund seiner Prozeßparameter führt dieses Verfahren zu Pulvern völlig unterschiedlicher Morphologie im Vergleich zu den nach dem erfindungsgemäßen Verfahren erhältlichen Pulvern.

Die gemäß der JP-A 78 123 722 erhaltenen Kristalle weisen vorzugweise einen Durchmesser von 1 bis 2 μm im Durchschnitt und eine Länge des 10- bis 20fachen Durchmessers auf. Dies bedeutet jedoch einen geringen spezifischen Korngrenzenanteil pro Volumenanteil und damit auch geringere Härte.

Gemäß dem Verfahren der JP-A 78 122 722 erfolgt die Umsetzung der Kobaltsalze zum Kobaltcarbonat bei pH-Werten im Bereich von 7,0 bis 7,4. Bei Umsetzungen in diesem pH-Bereich werden die in der Lösung befindlichen Co-Ionen quantitativ ausgefällt. Als Nachteil tritt jedoch eine Verschlechterung der Waschbarkeit des Niederschlages auf, die zu den erhöhten Na-, Ca- und S-Gehalten im Endprodukt führt.

Das erfindungsgemäße Verfahren wird hingegen so ausgeführt, daß der pH-Wert auf kleiner 6,8, vorzugsweise auf 6,0 bis 6,7, eingestellt wird. Hierdurch wird eine wesentlich bessere Waschbarkeit des Niedersclages erzielt und so der Gehalt an Verunreinigungen deutlich erniedrigt. Die Fällung bei einem pH-Wert von kleiner 6,8 widerspricht allerdings der Forderung nach einer vollständigen Umsetzung der Co-Ionen. Die ablaufenden Reaktionslösung ist noch rosa gefärbt, d. h. sie enthält erhebliche Mengen an nicht zur Reaktion gebrachten Co-Ionen, die mit ins Abwasser gelangen würden. Dies bedeutet einerseits Umweltprobleme, andererseits aufgrund des hohen Preises für Co-Rohstoffe einen nicht zu vertretenden wirtschaftlichen Verlust. Bei dem erfindungsgemäßen Verfahren wird dennoch die Fällung bei einem pH-Wert von kleiner 6,8 durchgeführt. Die gravierenden Nachteile dieser Fällbedingung werden erfindungsgemäß dadurch vermieden, daß das in der ablaufenden Reaktionslösung enthaltende Kobalt im Kreislauf gefahren und der $CoCl_2$ - Lösung, gegebenenfalls unter erneuter Einstellung eines geeigneten pH-Wertes, vor der Umsetzung zugeführt wird. Verfahrenstechnisch sind eine Vielzahl von Möglichkeiten durchführbar, um das Kobalt als schwerlösliche Verbindung abzutrennen. Dies sind u.a.:

-   Fällung des Kobalts als Kobalthydroxid durch Natriumhydroxidzugabe

-   Fällung des Kobalts als basisches Kobalthydroxid durch alkalische Oxidation mit Wasserstoffperoxid

-   Fällung des Kobalts als Kobaltcarbonat durch die Zugabe von Alkali und/oder Erdalkalicarbonaten bzw. hydrogencarbonaten bei geeigneten pH Werten.

-   Fällung des Kobalts als basisches Kobaltcarbonat durch das Einblasen von Kohlendioxid.

Durch die erfindungsgemäße Durchführung der Fällung wird gewährleistet, daß ein besonders feinkörniger Kobalt enthaltender Niederschlag entsteht. Messungen mit dem Malvern Master Sizer Gerät, an Proben, die aus der Fällsuspension entnommen wurden, ergaben, daß der $d_{90}$-Wert max. 90 μm, besonders bevorzugt, max. 40 μm beträgt. Werden die Fällungen gemäß des bekannten Stands der Technik durchgeführt, so beträgt der $d_{90}$-Wert 130μm.

Das Reaktionsprodukt wird vorteilhaft mit Wasser bis zur angestrebten Reinheit gewaschen. Das Waschen geschieht bevorzugt in mehreren Schritten, wobei zunächst die Wassertemperaturen im Bereich von 0°C bis 35°C und abschließend im Bereich von 35°C bis Siedetemperatur gewählt werden. Anschließend wird das Kobaltcabonat vorzugsweise in einem bewegten Bett getrocknet. Schließlich wird das Produkt zum Kobaltoxid umgesetzt. Dies wird vorzugsweise mit Wasserstoff zum ultrafeinen, sehr reinem Kobaltmetallpulver reduziert.

Besonders bevorzugt wird zwischen den Schritten des Trocknens und des Reduzierens eine Kalzination bei Temperaturen von 500°C - 800°C durchgeführt. Die Reduktion selbst wird vorteilhaft bei Temperaturen zwischen 400°C und 550°C durchgeführt.

Im folgenden wird die Erfindung beispielhaft erläutert, ohne daß hierin eine Einschränkung zu sehen ist.

**Beispiel 1**

2 Teilströme aus

a) einer Kobaltchloridlösung (Konzentration der Co Ionen 105 g/l) mit einem Volumenstrom von 4,3 l/h und

b) einer Natriumhydrogencarbonatlösung (Konzentration 90 g/l) mit einem Volumenstrom von 14,3 l/h wurden in kontinuierlicher Arbeitsweise in einem Rührreaktor zur Reaktion gebracht. In der ablaufenden Reaktionssuspension wurde ein pH Wert von 6,5 gemessen und ein $d_{90}$ Wert des supsensierten Fällproduktes, gemessen mit Malvern Master Sizer zu 38 μm bestimmt. Die Reaktionssupension wurde filtriert. Das noch Kobalt enthaltende Filtrat wurde mit Natriumhydroxid behandelt und das ausgefällte und abfiltrierte Kobalthydroxid in HCl gelöst und der Reaktionslösung a) zugegeben. Der Filtrationsrückstand der Reaktionssupension wurde portionsweise zunächst neun mal mit 28°C kühlen, nachfolgend mit heißem Wasser der Temperatur 76°C gewaschen. Nachdem das Produkt bei 580°C in einem Sporühtrockner getrocknet wurde, wurde es bei 520°C zum Kobaltoxid zersetzt, welches dann unter Wasserstoff bei 490°C zum Kobaltmetallpulver reduziert wurde. Es konnte ein Kobaltmetallpulver mit einer Korngröße gemessen nach der Fisher Sub Sieve Methode von 0,88 μm erhalten werden.

Eine chemische Analyse ergab folgende Verunreinigungen:

Na: 30 ppm
Ca: 10 ppm
S : <10ppm

**Beispiel 2**

2 Teilströme aus

a) einer Kobaltchloridlösung (Konzentration der Co Ionen 82 g/l) mit einem Volumenstrom von 3,8 l/h und

b) einer Ammoniumhydrogencarbonatlösung (Konzentration 101,7 g/l) mit einem Volumenstrom von 8,9 l/h wurden in kontinuierlicher Arbeitsweise in einem statischen Mischer zur Reaktion gebracht. In der ablaufenden Reaktionssuspension wurde ein pH Wert von 6,4 gemessen und ein $d_{90}$ Wert des supsensierten Fällproduktes, gemessen mit Malvern Master Sizer zu 37 μm bestimmt. Die Reaktionssuspension wurde filtriert. Das noch Kobalt enthaltende Filtrat wurde mit Magnesiumcartbonat behandelt und das ausgefällte und abfiltrierte Kobaltcarbonat in HCl gelöst und der Reaktionslösung a) zugegeben. Der Filtrationsrückstand der Reaktionssupension wurde portionsweise zunächst mit Eiswasser, nachfolgend mit heißem Wasser der Temperatur 67°C gewaschen. Nachdem das Produkt bei 590°C getrocknet wurde, wurde es bei 600°C zum Kobaltoxid zersetzt, welches dann unter Wasserstoff bei 500°C zum Kobaltmetallpulver reduziert wurde. Es konnte ein Kobaltmetallpulver mit einer Korngröße gemessen nach der Fisher Sub Sieve Methode von 0,90 μm erhalten werden.

Eine chemische Analyse ergab folgende Verunreinigungen:

Na: 35 ppm
Ca: 8 ppm
S : <10 ppm

**Beispiel 3**

2 Teilströme aus

a) einer Kobaltchloridlösung mit einem Volumenstrom von 43,2 l/h (Konzentration der Co Ionen 98 g/l )und

b) einer Natriumhydrogencarbonatlösung (Konzentration 92 g/l) mit einem Volumenstrom von 155 l/h wurden in kontinuierlicher Arbeitsweise in einer Füllkörperkolonne zur Reaktion gebracht. In der ablaufenden Reaktionssuspension wurde ein pH Wert von 6,6 gemessen und ein $d_{90}$ Wert des supsensierten Fällproduktes, gemessen mit Malvern Master Sizer zu 40 µm bestimmt. Die Reaktionssupension wurde filtriert. Das noch Kobalt enthaltende Filtrat wurde mit Natriumcarbonat behandelt und das ausgefällte und abfiltrierte Kobaltcarbonat portionsweise der Reaktionslösung a) zugegeben. Der Filtrationsrückstand der Reaktionssupension wurde portionsweise zunächst mit kaltem, nachfolgend mit heißem Wasser der Temperatur 83°C gewaschen. Nachdem das Produkt bei 560°C getrocknet wurde, wurde es bei 680°C zu Kobaltoxid zersetzt, welches dann unter Wasserstoff bei 460°C zum Kobaltmetallpulver reduziert wurde. Es konnte ein Kobaltmetallpulver mit einer Korngröße gemessen nach der Fisher Sub Sieve Methode von 0,93 µm erhalten werden.

Eine chemische Analyse ergab folgende Verunreinigungen:

Na: 36 ppm
Ca: 9 ppm
S : 11 ppm

**Patentansprüche**

1. Verfahren zur Herstellung von Kobaltmetallpulver, wobei ein lösliches Kobaltsalz mit einer Lösung und/oder Suspension von Alkali-, Erdalkali-, Kobalt- und/oder Ammoniumcarbonaten und/oder -hydrogencarbonaten umgesetzt, das dabei entstandene Fällprodukt abgetrennt, mit Wasser bis zur angestrebten Reinheit gewaschen, getrocknet und das so erhaltene Kobaltcarbonat zum Kobaltmetallpulver reduziert wird, dadurch gekennzeichnet, daß die Umsetzung im pH-Bereich von 5,5 bis 6,8 und bei Temperaturen unterhalb von 35°C durchgeführt wird.

2. Verfahren gemäß Anspruch 1, dadurch gekennzeichnet, daß das Waschen in mehreren Schritten geschieht, wobei zunächst die Wassertemperaturen im Bereich von 0°C bis 35°C und abschließend im Bereich von 35°C bis Siedetemperatur gewählt werden.

3. Verfahren gemäß Anspruch 1 oder 2, dadurch gekennzeichnet, daß das Trocknen in einer bewegten Schicht vorgenommen wird.

4. Verfahren gemäß einem der Ansprüche 1 bis 3, dadurch gekennzeichnet, daß zwischen dem Trocknen und dem Reduzieren eine Calcination bei Temperaturen von 500°C bis 800°C durchgeführt wird.

5. Verfahren gemäß einem der Ansprüche 1 bis 4, dadurch gekennzeichnet, daß die Reduktion bei Temperaturen zwischen 400°C und 550°C durchgeführt wird.

6. Verfahren nach einem der Ansprüche 1 bis 5, dadurch gekennzeichnet, daß das nach Abtrennung des Fällproduktes in der Reaktionslösung noch enthaltene Kobalt im Kreislauf gefahren und der Kobaltsalzlösung wieder zugeführt wird.

**Claims**

1. Method of preparing cobalt metal powder, wherein a soluble cobalt salt is reacted with a solution and/or suspension of carbonates and/or hydrogen carbonates of alkali metals, of alkaline earths, of cobalt and/or of ammonia, the precipitation product thus formed is separated off, washed with water until the required purity is attained, dried and the cobalt carbonate thus obtained is reduced to cobalt metal powder, characterised in that the reaction is carried out in the pH range of 5.5 to 6.8 and at temperatures of below 35°C.

2. Method according to claim 1, characterised in that the washing is carried out in several steps, wherein the water temperatures chosen are initially in the range of 0°C to 35°C and finally in the range of 35°C up to boiling temperature.

3. Method according to claim 1 or 2, characterised in that the drying is carried out in a moving bed.

4. Method according to one of claims 1 to 3,
characterised in that a calcination at temperatures of from 500°C to 800°C is carried out after the drying and before the reduction.

5. Method according to one of claims 1 to 4,
characterised in that the reduction is carried out at temperatures of between 400°C and 550°C.

6. Method according to one of claims 1 to 5,
characterised in that, after separation of the precipitation product, cobalt still present in the reaction solution is recirculated and the cobalt salt solution is returned.


**Revendications**

1. Procédé pour la préparation d'une poudre de cobalt métallique dans lequel on fait réagir un sel de cobalt soluble avec une solution et/ou une suspension de carbonates et/ou bicarbonates de métaux alcalins, de métaux alcalino-terreux, de cobalt ou/et d'ammonium, on sépare le produit qui a précipité, on le lave à l'eau jusqu'à la pureté voulue, on le sèche puis on réduit le carbonate de cobalt ainsi obtenu en poudre de cobalt métallique, caractérisé en ce que la réaction est réalisée dans l'intervalle de pH de 5,5 à 6,8 et à des températures inférieures à 35°C.

2. Procédé selon la revendication 1, caractérisé en ce que le lavage est réalisé en plusieurs stades au cours desquels la température de l'eau se situe au début entre 0 et 35°C et pour finir dans l'intervalle allant de 35°C à la température d'ébullition.

3. Procédé selon la revendication 1 ou 2, caractérisé en ce que le séchage est réalisé sur une couche mobile.

4. Procédé selon l'une des revendications 1 à 3, caractérisé en ce que, entre le séchage et la réduction on procède à une calcination à des températures de 500 à 800°C.

5. Procédé selon l'une des revendications 1 à 4, caractérisé en ce que la réduction est réalisée à des températures de 400 à 550°C.

6. Procédé selon l'une des revendications 1 à 5, caractérisé en ce que, après séparation du produit qui a précipité, on recycle le cobalt encore contenu dans la solution de réaction et on renvoie la solution de sel de cobalt aux opérations.